**Europäisches Patentamt**

**European Patent Office**

**Office européen des brevets**

(19)

(11) Veröffentlichungsnummer : **0 023 691**
**B1**

(12) **EUROPÄISCHE PATENTSCHRIFT**

(45) Veröffentlichungstag der Patentschrift :
01.06.83

(51) Int. Cl.³ : **H 04 M 11/06**

(21) Anmeldenummer : **80104430.6**

(22) Anmeldetag : **28.07.80**

(54) Schaltungsanordnung zum Anschalten eines Modems an eine Fernsprechleitung.

(30) Priorität : **02.08.79 DE 2931435**

(43) Veröffentlichungstag der Anmeldung :
**11.02.81 Patentblatt 81/06**

(45) Bekanntmachung des Hinweises auf die Patenterteilung : **01.06.83 Patentblatt 83/22**

(84) Benannte Vertragsstaaten :
**AT BE CH FR GB IT LI LU NL SE**

(56) Entgegenhaltungen :
**DE B 2 814 837**
**DE B 2 826 323**
**US A 3 517 137**
**TECHNISCHE MITTEILUNGEN AEG-TELEFUN-KEN, Band 69, Nr. 4, 1979, Berlin, DE, W. BAM-BACH et al. : « Bildschirmtext - Beschreibung des Teilnehmergerätes und der Datenübertragungseinrichtung », Seiten 136-140**

(73) Patentinhaber : **SIEMENS AKTIENGESELLSCHAFT**
**Berlin und München Wittelsbacherplatz 2**
**D-8000 München 2 (DE)**

(72) Erfinder : **Sailer, Heinrich, Dipl. Ing.**
**Michlbauerstrasse 3**
**D-8021 Neuried (DE)**
Erfinder : **Vogeler, Torsten, Dipl. Ing.**
**Wiener Strasse 6**
**D-8023 Pullach (DE)**

## Schaltungsanordnung zum Anschalten eines Modems an eine Fernsprechleitung

Die Erfindung bezieht sich auf eine Schaltungsanordnung zum Anschalten eines mit einem Endgerät verbundenen Modems an eine Fernsprechleitung, die normalerweise mit einem Fernsprechapparat verbunden ist, wobei mit Auftreten eines in dem Endgerät erzeugten Anschaltsignals die Fernsprechleitung unter Verwendung eines Relais lediglich in dem Fall vom Fernsprechapparat getrennt und mit dem Modem verbunden wird, daß von einer Überwachungsschaltung die Abgabe eines die Belegung des Fernsprechapparats anzeigenden Belegungssignals an das Endgerät unterbleibt, und wobei ein Zeitglied vorgesehen ist, welches erst eine vorgegebene Zeitspanne nach Auslösen einer zuvor über die Fernsprechleitung geführten Verbindung ein erneutes Belegen der Fernsprechleitung ermöglicht.

Eine Schaltungsanordnung der vorstehend bezeichneten Art ist generell bekannt (US-PS 3 517 137). Das bei dieser bekannten Schaltungsanordnung vorgesehene Zeitglied ist dabei jedoch lediglich dann wirksam, wenn bei der betreffenden Schaltungsanordnung der Fernsprechapparat wirksam geschaltet ist und wenn der Gabelumschalter dieses Fernsprechapparats in seine Auflege-Position gebracht wird. Dies bedeutet aber, daß das Endgerät an sich nicht das erwähnte Zeitglied wirksam zu steuern gestattet.

Es ist ferner eine Schaltungsanordnung bekannt (DE-AS 2 814 837), bei der die Trennung der Fernsprechleitung von einem Fernsprechapparat und die Anschaltung des Modems an die Fernsprechleitung unter Verwendung eines bistabilen Relais erfolgt. Im Ruhezustand nimmt das Relais eine Lage ein, in der ein Umschaltkontakt die Fernsprechleitung mit dem Fernsprechapparat verbindet. Nach dem Auftreten eines vom Endgerät erzeugten Anschaltsignals nimmt das Relais seine andere Lage ein, und der Umschaltkontakt verbindet die Fernsprechleitung mit dem Modem. Wenn das Anschaltsignal beendet wird, nimmt das Relais wieder seine ursprüngliche Lage ein, in der die Fernsprechleitung mit dem Fernsprechapparat verbunden ist. Die bekannte Schaltungsanordnung enthält weiterhin eine Überwachungsschaltung, die an das Endgerät ein Belegungssignal abgibt, wenn der Fernsprechapparat belegt ist. Über irgendwelche Maßnahmen zur Sicherstellung der Vermeidung von Fehlverbindungen nach Auslösen einer Verbindung ist in diesem Zusammenhang nichts bekannt.

Es ist ferner eine Schaltungsanordnung zum Übertragen von Signalen zwischen einer Datenübertragungseinheit und einem Datenendgerät vorgeschlagen worden (DE-AS 2 826 323), bei der ebenfalls von einem Endgerät an einen Modem ein Anschaltsignal abgegeben wird, welches eine Fernsprechleitung vom Fernsprechapparat trennt und mit dem Modem verbindet. Neben dem Anschaltsignal werden zwischen dem Modem und dem Endgerät auf zwei weiteren Leitungen Signale übertragen, die Belegungssignale, Wählsignale, Steuersignale und Datensignale darstellen. Auch bei dieser Schaltungsanordnung ist eine Überwachungsschaltung zum Überwachen des Schleifenstroms in der Fernsprechleitung vorgesehen. Über irgendwelche Maßnahmen zur Sicherstellung der Vermeidung von Fehlverbindungen nach Auslösen einer Verbindung ist auch in diesem Zusammenhang nichts bekannt.

Generell besteht die Forderung, das Anschalten eines Modems an eine Fernsprechleitung nur dann vorzunehmen, wenn der Fernsprechapparat nicht belegt ist. Außerdem muß der Schleifenstrom in der Fernsprechleitung nach einer Belegung oder Anschaltung für eine vorgegebene Zeitdauer unterbrochen sein, um bei einem wiederholten Anschalten ein Auslösen der Verbindung zu gewährleisten. Falls beispielsweise der Modem an die Fernsprechleitung angeschaltet werden soll und unmittelbar zuvor an dem zugehörigen Fernsprechapparat ein Gespräch durch Auflegen des Handapparats beendet wurde, muß die vorgegebene Zeitspanne eingehalten werden, um sicherzustellen, daß die Verbindung auch ausgelöst worden ist.

Der Erfindung liegt demgemäß die Aufgabe zugrunde, eine Schaltungsanordnung der eingangs genannten Art so weiterzubilden, daß sowohl bei wiederholtem Einschalten des Endgeräts eine Verbindung für eine vorgegebene Zeitdauer unterbrochen wird als auch das Anschalten nur dann erfolgt, wenn der Fernsprechapparat nicht belegt ist.

Gelöst wird die vorstehend aufgezeigte Aufgabe bei einer Schaltungsanordnung der eingangs genannten Art erfindungsgemäß dadurch, daß das Zeitglied lediglich durch das vom Endgerät erzeugte Anschaltsignal wirksam steuerbar ist, und ein das Relais erregendes Signal abgibt, während durch Auftreten eines dem genannten Belegungssignal zugeordneten Steuersignals eine Sperrung des betreffenden Zeitgliedes erfolgt.

Die Erfindung bringt den Vorteil mit sich, daß die vorgegebene Zeitdauer bzw. Zeitspanne für die Unterbrechung einer Verbindung bei wiederholtem Anschalten des Endgeräts im Modem selbst erzeugt wird und damit weder im Endgerät noch vom Benutzer gesondert berücksichtigt werden muß. Durch die Sperrung des Zeitgliedes wird im übrigen mit geringem Aufwand die Anschaltung des Endgeräts bzw. des Modems an die Fernsprechleitung verhindert, wenn der zugehörige Fernsprechapparat belegt ist.

Die Schaltungsanordnung gemäß der Erfindung erfordert insbesondere dann einen geringen schaltungstechnischen Aufwand, wenn das Zeitglied ein aus einem Kondensator und einem Widerstand gebildetes Integrierglied enthält, bei dem parallel zum Kondensator ein durch das Steuersignal betätigbarer Schalter angeordnet ist, und eine nachgeschaltete Schwellwertstufe aufweist, an deren Ausgang das Relais angeschlossen ist. Dabei ist es zweckmäßig, daß als Schalter ein durch das Steuersignal angesteuerter Transistor vorgesehen ist.

Eine galvanische Trennung der Anschalteinheit von der Fernsprechleitung wird auf einfache Weise erreicht, wenn das Steuersignal durch Schließen eines Kontakts eines Relais erzeugt wird, dem neben einem Kondensator zwei entgegengesetzt gerichtete Dioden parallel geschaltet sind. Die Dioden dienen dabei zum Schutz des Relais gegen einen zu hohen Schleifenstrom.

Um bei wiederholten Anschaltungen jeweils die gleiche vorgegebene Zeitdauer zu erreichen ist es von Vorteil, wenn parallel zum Widerstand eine Diode angeordnet ist.

Die Schaltungsanordnung erfordert auch einen geringen Aufwand, wenn als Zeitglied eine sperrbare, integrierte monostabile Kippstufe vorgesehen ist. Falls der Modem weitgehend aus integrierten digitalen Schaltkreisen besteht, ist es günstig, wenn auch das Zeitglied aus integrierten digitalen Schaltkreisen gebildet wird.

Falls zwischen dem Modem und dem Endgerät nur eine geringe Anzahl von Leitungen vorhanden ist, ist es von Vorteil, wenn das Steuersignal in einem optoelektronischen Koppelelement der Basis eines Fototransistors zugeführt wird, an dessen Kollektor das Belegungssignal und in Abhängigkeit von einer Leuchtdiode zugeführten Signalen Daten- und/oder Steuersignale an das Endgerät abgegeben werden.

Im folgenden wird ein mit den Merkmalen der Erfindung ausgestattetes Ausführungsbeispiel anhand von Zeichnungen näher erläutert.

Es zeigen :

Figur 1 ein Blockschaltbild der Schaltungsanordnung,

Figur 2 ein Schaltbild der Schaltungsanordnung.

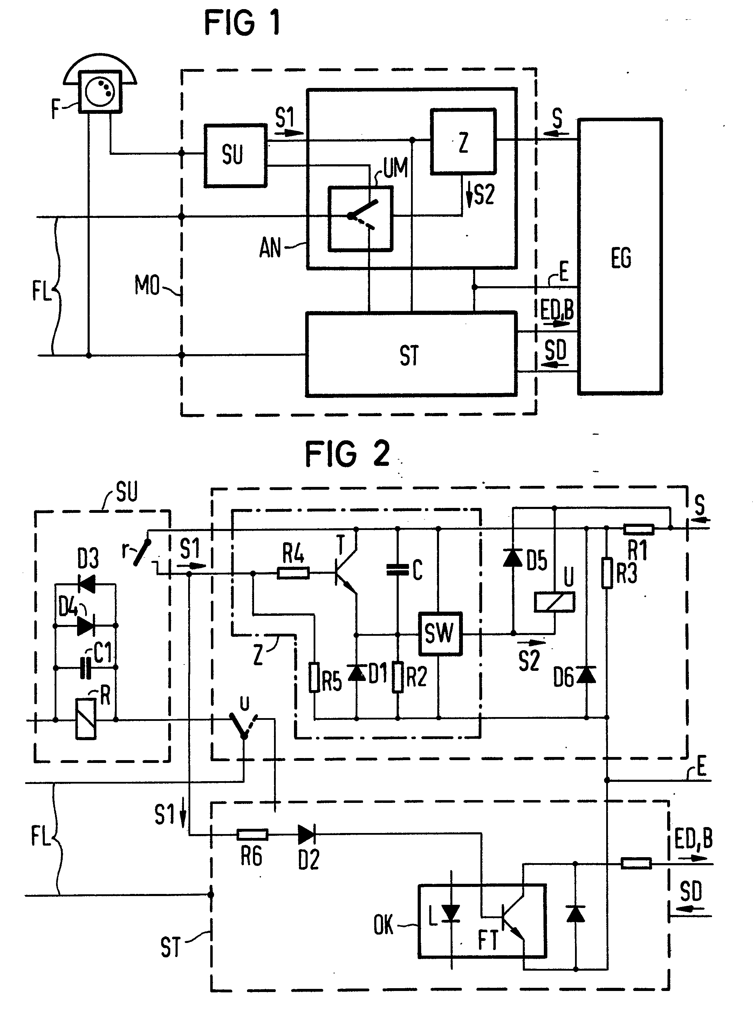

Bei der in Fig. 1 dargestellten Schaltungsanordnung ist ein Modem MO zwischen einem Endgerät EG und einer Fernsprechleitung FL angeordnet. An der Fernsprechleitung FL ist außerdem ein Fernsprecher F angeschlossen. Der Modem MO enthält eine Anschalteinheit AN, die bei einer Übertragung von Daten zwischen der Fernsprechleitung FL und dem Endgerät EG den Fernsprecher F von der Fernsprechleitung FL trennt und mit dem Modem MO verbindet. Weiterhin enthält der Modem MO eine Steuereinheit ST, in der die Einrichtung für die Modulation und Demodulation der Datensignale, für die Steuerung des zeitlichen Ablaufs der Übertragung und für die Stromversorgung des Modems enthalten sind. Außerdem enthält der Modem MO eine Überwachungsschaltung SU, die den Schleifenstrom in der Fernsprechleitung FL überwacht und ein Steuersignal S1 erzeugt, wenn der Fernsprecher F belegt ist und Schleifenstrom fließt.

Wenn der Modem MO an die Fernsprechleitung FL angeschaltet werden soll, erzeugt das Endgerät EG ein Anschaltsignal S, das einem Zeitglied Z in der Anschalteinheit AN zugeführt wird. Unter der Annahme, daß der Fernsprecher F nicht belegt ist, der Umschalter UM die durchgezogen dargestellte Stellung einnimmt und das Steuersignal S1 nicht vorhanden ist, gibt das Zeitglied Z eine vorgegebene Zeitdauer nach dem Auftreten des Anschaltsignals S ein Signal S2 an den Umschalter UM. Der Umschalter UM wird durch das Signal S2 von der durchgezogen dargestellten Stellung in die gestrichelt dargestellte Stellung gebracht und die Fernsprechleitung FL wird mit der Steuereinheit ST verbunden und es kann eine Übertragung von Daten erfolgen. Empfangene Daten, sowie vom Modem MO abgegebene Steuersignale, werden als Signale ED dem Endgerät EG zugeführt, während zu sendende Daten und vom Endgerät abgegebene Steuersignale als Signale SD zum Modem MO übertragen werden. An einer weiteren Leitung E liegt ein Bezugspotential an.

Wenn das Endgerät EG das Anschaltsignal S abgibt und der Fernsprecher F belegt ist, so daß ein Steuersignal S1 abgegeben wird, wird das Zeitglied Z gesperrt und ein Anschalten des Modems MO wird verhindert. Außerdem erzeugt die Steuereinheit ST aus dem Steuersignal S1 ein Belegungssignal B, das dem Endgerät EG die Belegung des Fernsprechers F anzeigt.

Weitere Einzelheiten der Schaltungsanordnung werden zusammen mit dem in Fig. 2 dargestellten Schaltbild beschrieben.

Bei der in Fig. 2 dargestellten Schaltungsanordnung wird der Umschalter UM aus einem Relais U mit einem Umschaltkontakt u gebildet. Ein Anschluß der Fernsprechleitung FL wird dem Mittelanschluß des Umschaltkontakts u zugeführt. Im Ruhezustand nimmt der Umschaltkontakt u die durchgezogen dargestellte Stellung an und verbindet über die Überwachungsschaltung SU den Anschluß der Fernsprechleitung FL mit dem Fernsprechapparat F. Die Überwachungsschaltung SU enthält ein Relais R, dem ein Kondensator C1 und zwei entgegengesetzt gerichtete Dioden D3 und D4 parallel geschaltet sind. Durch die Dioden D3 und D4 wird ein Schutz des Relais gegen Überlastung erreicht. Zunächst wird angenommen, daß der Fernsprechapparat F nicht belegt ist und damit das Relais R nicht erregt ist. Sein Kontakt r ist damit geöffnet.

Wenn das Anschaltsignal S auftritt, wird es über einen Schutzwiderstand R1 zur Strombegrenzung dem Zeitglied Z zugeführt, das aus einem Integrierglied und einer Schwellwertstufe SW gebildet ist. Das Integrierglied besteht aus einem Kondensator C und einem Widerstand R2. Die Schwellwertstufe SW ist beispielsweise als Schmitt-Trigger ausgebildet und ist im Handel unter der Bezeichnung TCA345A erhältlich. Das Anschaltsignal S stellt gleichzeitig die Betriebsspannung der Schwellwertstufe SW dar. Das Zeitglied Z kann auch aus einer integrierten monostabilen Kippstufe gebildet werden, an deren Eingang das Anschaltsignal S anliegt und das einen Sperreingang aufweist, an dem das Steuersignal S1 anliegt. Das Zeitglied Z kann weiterhin ausschließlich aus integrierten digitalen Schaltkreisen bestehen. Beispielsweise wird es aus einem Zähler gebildet, der durch Taktimpulse konstanter Folgefrequenz nach jedem Auftreten des Anschaltsignals S von einem konstanten Anfangswert bis zu einem konstanten Endwert gezählt wird und sperrbar und rücksetzbar ist.

Zunächst ist der Kondensator C entladen und an der Schwellwertstufe SW liegt eine Spannung mit dem Momentanwert des Anschaltsignals S. Nach einer vorgegebenen Zeitdauer von beispielsweise 1,5 s unterschreitet die Spannung am Eingang der Schwellwertstufe SW einen vorgegebenen Wert und die Schwellwertstufe SW erzeugt das Signal S2, das das Relais U erregt. Der Umschaltkontakt u wird damit in die gestrichelt dargestellte Stellung gebracht und die Fernsprechleitung FL wird vom Fernsprecher F getrennt und mit der Steuereinheit ST des Modems MO verbunden. Das Relais U ist durch eine parallelgeschaltete Diode D5 geschützt. Außerdem enthält die Anschaltstufe AN eine weitere Diode D6, die sie gegen negative Spannungen des Anschaltsignals S schützt.

Wenn das Anschaltsignal S beendet wird, wird der Kondensator C über eine Diode D1 und einen Widerstand R2 schnell entladen. Die Spannung am Eingang der Schwellwertstufe SW überschreitet damit den vorgegebenen Schwellenwert, so daß die Erregung des Relais U beendet wird und der Umschaltkontakt u wieder die durchgezogen dargestellte Stellung annimmt, in der die Fernsprechleitung FL vom Modem MO getrennt und mit dem Fernsprecher F verbunden wird. Durch die schnelle Entladung des Kondensators C mittels der Diode D1 wird sichergestellt, daß bei einem kurz darauffolgenden erneuten Anschalten die Spannung am Eingang der Schwellwertstufe SW wieder erst nach der gleichen vorgegebenen Zeitdauer den Schwellenwert unterschreitet und damit die Anschaltung des Modems MO nach der gleichen Verzögerungszeit wie beim erstmaligen Anschalten erfolgt.

Falls der Fernsprecher F belegt ist, fließt Schleifenstrom und das Relais R ist erregt. Der Kontakt r ist damit geschlossen. Wenn in diesem Fall das Anschaltsignal S auftritt, gibt die Überwachungsschaltung su das Steuersignal S1 an einen als Schalter arbeitenden Transistor T ab, der dem Kondensator C parallel geschaltet ist. Der Transistor T wird durch das Steuersignal S1 leitend gesteuert, überbrückt den Kondensator C und verhindert damit seine Aufladung. Die Schwellwertstufe SW kann damit kein Signal S2 erzeugen. Das Relais U wird damit nicht erregt und der Umschaltkontakt u bleibt in seiner durchgezogen dargestellten Stellung, so daß der Modem nicht an die Fernsprechleitung FL angeschaltet wird. Dem Transistor T ist ein Widerstand R4 vorgeschaltet, mit dem sein Arbeitspunkt eingestellt wird. Außerdem ist der Widerstand R4 über einen Widerstand R5 mit der Leitung E verbunden, um bei einem geöffneten Kontakt r ein Sperren des Transistors T sicherzustellen.

Das Steuersignal S1 wird außerdem über einen Widerstand R6 und eine Diode D2 einem optoelektronischen Koppelelement OK in der Steuereinheit ST zugeführt. Über eine Leuchtdiode L und einen Fototransistor FT das optoelektronischen Koppelelementes OK werden normalerweise Steuersignale und Datensignale als Signale ED zum Endgerät EG übertragen. Im Handel sind optoelektronische Koppelelemente erhältlich, bei denen der Basisanschluß des Fototransistors FT zugänglich ist. Diesem Anschluß wird das Steuersignal S1 zugeführt, wodurch der Fototransistor FT leitend gesteuert wird und an das Endgerät EG das Belegungssignal B abgegeben wird, das dem Endgerät EG anzeigt, daß die Fernsprechleitung FL durch den Fernsprecher F belegt ist.

**Ansprüche**

1. Schaltungsanordnung zum Anschalten eines mit einem Endgerät (EG) verbundenen Modems (MO) an eine Fernsprechleitung (FL), die normalerweise mit einem Fernsprechapparat (F) verbunden ist, wobei mit Auftreten eines in dem Endgerät (EG) erzeugten Anschaltsignals (S) die Fernsprechleitung (FL) unter Verwendung eines Relais (U) lediglich in dem Fall vom Fernsprechapparat (F) getrennt und mit dem Modem (MO) verbunden wird, daß von einer Überwachungsschaltung (SU) die Abgabe eines die Belegung des Fernsprechapparats (F) anzeigenden Belegungssignal (S1, B) an das Endgerät (EG) unterbleibt, und wobei ein Zeitglied (Z) vorgesehen ist, welches erst eine vorgegebene Zeitspanne nach Auslösen einer zuvor über die Fernsprechleitung (FL) geführten Verbindung ein erneutes Belegen der Fernsprechleitung (FL) ermöglicht, dadurch gekennzeichnet, daß das Zeitglied (Z) lediglich durch das vom Endgerät (EG) erzeugte Anschaltsignal (S) wirksam steuerbar ist, und ein das Relais (U) erregendes Signal (S2) abgibt, während durch Auftreten eines dem genannten Belegungssignal (B) zugeordneten Steuersignals (S1) eine Sperrung des betreffenden Zeitgliedes (Z) erfolgt.

2. Schaltungsanordnung nach Anspruch 1, dadurch gekennzeichnet, daß das Zeitglied (Z) ein aus einem Kondensator (C) und einem Widerstand (R2) gebildetes Integrierglied enthält, bei dem dem Kondensator (C) ein durch das Steuersignal (S1) betätigbarer Schalter (T) parallel geschaltet ist und eine Schwellwertstufe (SW) enthält, an deren Ausgang das Relais (U) angeschlossen ist.

3. Schaltungsanordnung nach Anspruch 2, dadurch gekennzeichnet, daß als Schalter ein durch das Steuersignal (S1) angesteuerter Transistor (T) vorgesehen ist.

4. Schaltungsanordnung nach einem der Ansprüche 1 bis 3, dadurch gekennzeichnet, daß das Steuersignal (S1) durch Schließen eines Kontakts (r) eines Relais (R) erzeugt wird, dem neben einem Kondensator (C1) zwei entgegengesetzt gerichtete Dioden (D3, D4) parallel geschaltet sind.

5. Schaltungsanordnung nach Anspruch 2, dadurch gekennzeichnet, daß parallel zum Widerstand (R2) eine Diode (D1) angeordnet ist.

6. Schaltunganordnung nach Anspruch 1, dadurch gekennzeichnet, daß als Zeitglied eine sperrbare, integrierte monostabile Kippstufe vorgesehen ist.

7. Schaltungsanordnung nach Anspruch 1, dadurch gekennzeichnet, daß das Zeitglied aus integrierten, digitalen Schaltkreisen gebildet wird.

8. Schaltungsanordnung nach einem der Ansprüche 1 bis 7, dadurch gekennzeichnet, daß das Steuersignal (S1) in einem optoelektronischen Koppelelement (OK) der Basis eines Fototransistors (FT) zugeführt wird, an dessen Kollektor das Belegungssignal (B) und in Abhängigkeit von einer Leuchtdiode (L) zugeführten Signalen Daten- und/oder Steuersignale (ED) an das Endgerät (EG) abgegeben werden.

## Claims

1. Circuit arrangement for connecting a modem (MO), connected to a terminal device (EG), to a telephone line (FL), which is normally connected to a telephone apparatus (F), wherein, on the occurence of a switch-on signal (S) generated in the terminal device (EG), with the assistance of a relay (U) the telephone line (FL) is cut off from the telephone apparatus (F) and connected to the modem (MO) only in the event that a monitoring circuit (SU) fails to supply the terminal device (EG) with a seizure signal (SI, B) which indicates the seizure of the telephone apparatus (F), and wherein a timer (Z) is provided which permits the renewed seizure of the telephone line (FL) only after a predetermined period of time following the cutting off of a connection previously conducted via the telephone line (FL), characterised in that the timer (Z) can be actuated only by the switch-on signal generated by the terminal device (E) and emits a signal (S2) which energises the relay (U), whereas the timer (Z) in question is blocked as a result of the occurence of a control signal (SI) assigned to the aforementioned seizure signal (B).

2. Circuit arrangement as claimed in claim 1, characterised in that the timer (Z) contains an integrator formed by a capacitor (C) and a resistor (R2), and wherein the capacitor (C) is connected in parallel with a switch (T) which can be actuated by the control signal (SI) and contains a threshold value stage (SW) whose output is connected to the relay (U).

3. Circuit arrangement as claimed in claim 2, characterised in that the switch is provided by a transistor (T) driven by the control signal (SI).

4. Circuit arrangement as claimed in one of the claims 1 to 3, characterised in that the control signal (SI) is generated by the closure of a contact (r) of a relay (R) which is connected in parallel not only with a capacitor (CI) but also with two oppositely directed diodes (D3, D4).

5. Circuit arrangement as claimed in claim 2, characterised in that a diode (DI) is arranged in parallel with the resistor (R2).

6. Circuit arrangement as claimed in claim 1, characterised in that the timer consists of a blockable, integrated, monostable flip-flop.

7. Circuit arrangement as claimed in claim 1, characterised in that the timer is formed of integrated, digital circuits.

8. Circuit arrangement as claimed in one of the claims 1 to 7, characterised in that the control signal (SI) is fed in an optoelectronic coupling element (OK), to the base of a photo-transistor (FT) from the collector of which the seizure signal (B) and — in dependence upon signals fed to a light-emitting diode (L) — data signals and/or control signals (ED) are emitted to the terminal device (EG).

## Revendications

1. Montage pour connecter un modem (MO) relié à un terminal (EG), à une ligne téléphonique (FL) qui est normalement reliée à un appareil téléphonique (F), du type dans lequel, à l'apparition d'un signal de branchement (S) produit dans le terminal, la ligne téléphonique (FL) est, avec l'utilisation d'un relais (U), séparée de l'appareil téléphonique et reliée au modem (MO) uniquement dans le cas de l'absence de l'émission par un circuit de surveillance (SU) pour le terminal (EG), d'un signal d'occupation (SI, B) indiquant l'occupation de l'appareil téléphonique (F), et dans lequel est prévu un dispositif de temporisation (Z) qui ne permet une nouvelle occupation de la ligne téléphonique (FL) qu'après un intervalle de temps prédéterminé après la suppression d'une liaison établie antérieurement par l'intermédiaire de la ligne téléphonique (FL), caractérisé par le fait que le dispositif temporisateur (Z) est uniquement susceptible d'être commandé dans son état efficace par le signal de branchement (S) produit par le terminal et émet un signal (S2) excitant le relais (U), alors que par l'apparition d'un signal de commande (SI) associé audit signal d'occupation (B), a lieu le blocage du dispositif de temporisation (Z) concerné.

2. Montage selon la revendication 1, caractérisé par le fait que le dispositif de temporisation (Z) comporte un circuit intégrateur constitué par un condensateur (C) et par une résistance (R2) et dans lequel un commutateur (T) susceptible d'être commandé par un signal de commande (SI) est monté en parallèle sur le condensateur (C), et comporte un étage à valeur de seuil (SW) à la sortie duquel est relié le relais (U).

3. Montage selon la revendication 2, caractérisé par le fait qu'à titre de commutateur, il est prévu un transistor (T) attaqué par le signal de commande (SI).

4. Montage selon l'une des revendications 1 à 3, caractérisé par le fait que le signal de commande (SI) est produit par la fermeture d'un contact (r) d'un relais (R) sur lequel sont branchés en parallèle, en plus d'un condensateur (CI), deux diodes (D3, D4) montées en sens inverse l'une par rapport à l'autre.

5. Montage selon la revendication 2, caractérisé par le fait qu'en parallèle à la résistance (R2) est montée une diode (DI).

6. Montage selon la revendication 1, caractérisé par le fait qu'au titre du dispositif de temporisation, il est prévu un étage à bascule monostable intégrée et susceptible d'être bloquée.

7. Montage selon la revendication 1, caractérisé par le fait que le dispositif de temporisation est constitué par des circuits de commutation numériques intégrés.

8. Montage selon l'une des revendications 1 à 7, caractérisé par le fait que dans un coupleur optoélectronique (OK), le signal de commande (SI) est appliqué à la base d'un phototransistor (FT) dont le collecteur émet le signal d'occupation (B), et, en fonction des signaux amenés par une diode luminescente (L), des signaux de données et/ou des signaux de commande (ED) sont émis pour le terminal.

## FIG 1

## FIG 2